(19) Europäisches Patentamt
European Patent Office
Office européen des brevets

(11) EP 3 860 956 B1

(12) **EUROPEAN PATENT SPECIFICATION**

(45) Date of publication and mention of the grant of the patent:
**27.11.2024 Bulletin 2024/48**

(21) Application number: **18792523.5**

(22) Date of filing: **03.10.2018**

(51) International Patent Classification (IPC):
***C02F 5/14*** *(2023.01)* ***C07F 9/38*** *(2006.01)*
***C09K 8/54*** *(2006.01)*

(52) Cooperative Patent Classification (CPC):
**C07F 9/3873; C02F 5/14; C09K 8/54;** C07F 9/091; C07F 9/3808; C07F 9/386

(86) International application number:
**PCT/IB2018/057688**

(87) International publication number:
**WO 2020/070543 (09.04.2020 Gazette 2020/15)**

(54) **PROCESS FOR MANUFACTURING N-ALKYL-DIPHOSPHONATE AMINO AMINOACIDS**

VERFAHREN ZUR HERSTELLUNG VON N-ALKYL-DIPHOSPHONAT-AMINOSÄUREN

PROCÉDÉ DE FABRICATION D'ACIDES AMINÉS DE N-ALKYL-DIPHOSPHONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.08.2021 Bulletin 2021/32**

(73) Proprietor: **Italmatch Chemicals S.p.A.**
**20020 Arese (MI) (IT)**

(72) Inventors:
- **BRUYNEEL, Frédéric**
  **20900 Monza MB (IT)**
- **DEVAUX, Albert**
  **1435 Mont-Saint-Guibert (BE)**
- **KOAY, Eric**
  **21040 Gerenzano VA (IT)**

(74) Representative: **Trupiano, Federica**
**Marietti, Gislon e Trupiano S.r.l.**
**Via Larga, 16**
**20122 Milano (IT)**

(56) References cited:
**EP-A1- 0 000 930**
**EP-A1- 1 932 850**
**WO-A2-2008/017338**
**DE-A1- 1 958 123**
**DE-B1- 2 732 777**
**US-A- 4 307 038**

- **PRISHCHENKO ANDREY A ET AL: "Organosilicon based synthesis of new functionalized aminomethylenediphosphonates with moieties of amino acids", JOURNAL OF ORGANOMETALLIC CHEMISTRY, ELSEVIER, AMSTERDAM, NL, vol. 871, 7 July 2018 (2018-07-07), pages 36 - 39, XP085437621, ISSN: 0022-328X, DOI: 10.1016/J.JORGANCHEM.2018.07.007**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

SUMMARY

The present invention relates to a process for manufacturing N-alkyl-diphosphonate amino acids, as well as the use of said amino acids for scale inhibition (not being according to the invention) and the method for scale inhibition (not being according the invention).

STATE OF THE ART

Aqueous systems contain cations, such as calcium, barium and magnesium, and anions, such as bi-carbonate, carbonate and sulfate. If the combination of cations and anions remain solubilized within said water systems, they do not cause concern. However, perturbations of water systems, including water evaporation, mixing of incompatible waters, pH changes, and pressure or temperature changes, may lead to formation and precipitation of salt particulate, usually called scale.

Common scales include calcium carbonate ($CaCO_3$), barium sulfate ($BaSO_4$) and strontium sulfate ($SrSO_4$), but may also include other scales such as iron sulfide ($Fe_xS_y$) or lead sulfide (PbS).

US 4,307,038A discloses N-carboxy alkyl amino alkane polyphosphonic acids prepared by reacting alkali metal salts of amino alkane phosphonic acids with alkali metal salts of unsaturated carboxylic acids. The N-carboxy alkyl amino alkane polyphosphonic acids can be employed for the treatment of water and for water softening.

DE2732777B1 relates to a process for the preparation of N-carboxyalkane-aminoalkane-polyphosphonic acids which are used for water treatment as scale inhibitors. The process is carried out by reacting solutions of alkali metal salts of aminoalkanephosphonic acids with alkali metal salts of unsaturated carboxylic acids at elevated temperatures.

EP0000930 A1 discloses a process for the preparation of N-carboxyalkane-aminoalkane-diphosphonic acids, N-carboxyalkane-azacycloalkane-diphosphonic acids and N-carboxyalkane-aminoarylalkane diphosphonic acids. The process comprises the dissolution of aminodiphosphonic acid in an alkali metal hydroxide solution and then introduction of halocarboxylic acid. The product obtained by this method is suitable for use as anti-corrosion agent and for products in the treatment of water.

Prischchenko Andrey at al., "Organosilicon based synthesis of new functionalised aminomethylenediphosphonates with moieties of amino acids", Journal of Organometallic Chemistry, Vol. 871, (2018), pages 36-39, disclose a process for the preparation of functionalised organophosphorous derivatives of aminocarboxylic acids. The process comprises the reaction of tris(trimethylsilyl)phosphite and N-formyl amino acids at the presence of catalyst. The obtained product is further reacted with methanol excess to obtain functionalised aminomethylenediphosphonic acids.

DE1958123A1 is concerned with a process for the preparation of 1-aminoalkane 1, 1-diphosphoniac acids by reacting phosphorous trihalides (e.g. PCl3) with monocarboxamides (e.g., N-substituted formamides), and subsequently reacting the obtained product with water.

EP1932850A1 discloses a method for the preparation of phosphonate compounds having the general formula T-B by reacting a phosphonate having the general formula -X-N(W)-ZPO3M2) and a reaction partner, selected from numerous moieties, in an aqueous medium. The obtained phosphonate compounds are useful in multiple industrial applications, such as water treatment, scale inhibition and corrosion inhibition.

WO2008/017338A2 discloses a method for treating water to inhibit scale, comprising the addition of a threshold amount of a selected amino acid alkyl phosphonic acid.

Scale formation and precipitation is a known occurrence that cause problems in several fields, including oilfield (surface and sub-surface operations), industrial water treatment and laundry and detergency (industrial and household cleaning applications). Indeed, if left untreated, scale deposits can have adverse effects including general fouling, reductions in the efficiency of a plant or equipment, mechanical failures, harboring bacteria, increased corrosion, or system shut down for remediation.

A well-known chemical treatment option for mitigating scale deposition is the use of scale inhibitors in threshold amount, *i.e.* in less than stoichiometric amount. Common scale inhibitors include phosphates, phosphate esters, phosphonates and polymeric agents. The terms "phosphonate" and "phosphonic acid" encompass the group of molecules characterized by the presence of a covalent carbon-to-phosphorus (C-P) bond, most commonly as part of a following molecular fragment:

$$-R^v-PO_3H_2$$

wherein $R^v$ is an alkyl group, usually a small alkyl group ($C_1$-$C_4$).

Within phosphonate scale inhibitors, common scale inhibitors belong to the amino-mono(or bis)-alkylphosphonates class, characterized by the following general aminomethylenephosphonate moiety:

$$—N(R^{iii})—R^{iv}—PO_3H_2$$

wherein $R^{iv}$ is an alkyl group, usually a small alkyl group ($C_1$-$C_4$), and $R^{iii}$ is selected from H, a second alkyl phosphonate (-$R^{iv}$-$PO_3H_2$) group, or another substituent, such as alkylhydroxy, etc.

Although very used for scale inhibition, phosphonate scale inhibitors may run into some problems.

Phosphonates are considered harmful for the environment. Indeed, phosphonates degrade slowly and their biodegradability is often not satisfying. Moreover, aminomethylenephosphonates release aminomethylphosphonic acid (AMPA) through biodegradation, which causes health and environmental damages.

Another recurrent problem of phosphonates is that, currently, most of the phosphonate scale inhibitors present a thermal stability profile that is not suitable for high pressure and high temperature applications, such as their use in oil and gas applications. Indeed, if thermal stability is not suitable, phosphonate scale inhibitors concentration lower considerably in the water system they are into, thus compromising scale inhibition. Particular aminoacid phosphonates, bearing aminomethylenephosphonic groups have been previously developed to partially address the challenge of higher biodegradability, higher thermal stability and good scale inhibiting properties, although they are exclusively efficient towards calcium inorganic scales. Examples of such particular aminoacid phosphonates are disclosed in PCT/EP2007/004682.

For these reasons, scale inhibiting methods that comprise using alternative phosphonates, which do not present the same problems as exposed above and provide excellent scale inhibition properties towards broader range of inorganic scales, are needed.

OBJECT OF THE INVENTION

Object of the present invention is to provide a cost-efficient, high yield and generally improved synthesis and a manufacturing process for specific phosphonate scale inhibitors.

Object of the present invention is to provide a method for scale inhibition comprising the use of phosphonate scale inhibitors possessing scale-inhibiting properties at least as good as the known conventional phosphonate scale inhibitors (not being according to theinvention).

Object of the present invention is also to provide a method for scale inhibition comprising the use of phosphonate scale inhibitors able to inhibit a broader range of different inorganic scales compared to conventional phosphonate scale inhibitors (not being according to the invention).

Further object of the invention is to provide a method for scale inhibition comprising the use of phosphonate scale inhibitors that result to be more biodegradable, without producing AMPA compared to conventional phosphonate scale inhibitors (not being according to the invention).

Another object of the invention is to provide a method for scale inhibition comprising the use of phosphonate scale inhibitors that are more thermally stable if compared to conventional phosphonate scale inhibitors (not being according to the invention). Finally, object of the present invention is to provide a use of said composition effective in inhibiting scale (not being according to the invention).

DESCRIPTION OF THE INVENTION

Subject-matter of the present invention is a method for the synthesis of a scale inhibitor as defined in claim 1.

According to an aspect of the invention, the method for scale inhibition comprises adding to an aqueous system an amount of at least one scale inhibitor of Formula I:

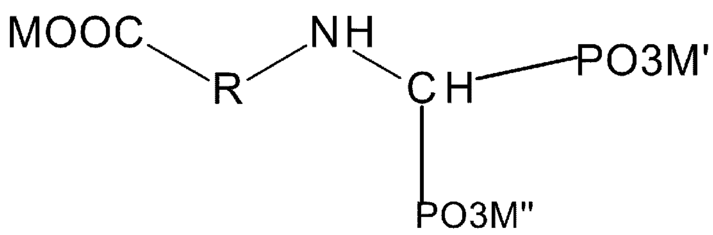

Formula I

wherein: M, M' and M" are independently selected from hydrogen and/or cation, R is selected from $C_2$-$C_{15}$ linear, branched or cyclic alkyl moiety, such alkyl moiety being optionally substituted by a $C_1$-$C_6$ linear, branched or cyclic alkyl group. When R is a cyclic alkyl moiety, it preferably contains from 4 to 10 carbons (not according to the invention).

In Formula I above, M, M' and M" may be each independently one or more cations, preferably selected from useful metal ions, such as sodium, lithium, potassium, calcium, magnesium, ammonium and quaternary ammonium. Useful quaternary ammonium cations are those having a molecular weight below 300 Da. It is obvious to the skilled man that, if said cation is for example a bivalent cation, said bivalent cation would form an ionic bond with two -COO- residues or with one $-PO3^{2-}$ residue. Therefore, it is clear that scale inhibitors of Formula I may be also used in the method of the invention as salts.

In the present invention, "scale" refers to any inorganic particulate, such as inorganic salts, well known to the skilled man, which may form from combinations of cations and anions comprised in a system. Common scale examples include $CaCO_3$, $BaSO_4$ $SrSO_4$, $Fe_xS_y$, and PbS. In the present invention, "scale formation" refers to the process of formation and/or precipitation and/or deposition of scales in any systems, and "scale inhibition" or similar terms refers to the inhibition of scale formation.

In order to prevent scale formation, the amount of said at least one scale inhibitor of Formula I to be added to said aqueous system may vary, and it can be less than stoichiometric amount (with respect to cations and/or anions forming scales contained in said aqueous system). Said less than stoichiometric amount is often referred to as "threshold amount" in the scale inhibition field. Said amount may be preferably of about 0.1 ppm to about 100000 parts per million (ppm), more preferably of about 1 to about 10000 ppm, but it can change depending on the concentrations of cations and anions in said system.

Preferred scale inhibitors of Formula I are scale inhibitors wherein R is a $C_3$-$C_6$ linear alkyl moiety, more preferably wherein R is a Cs linear alkyl moiety. For example, a preferred scale inhibitor according to the invention is the one of Formula II.

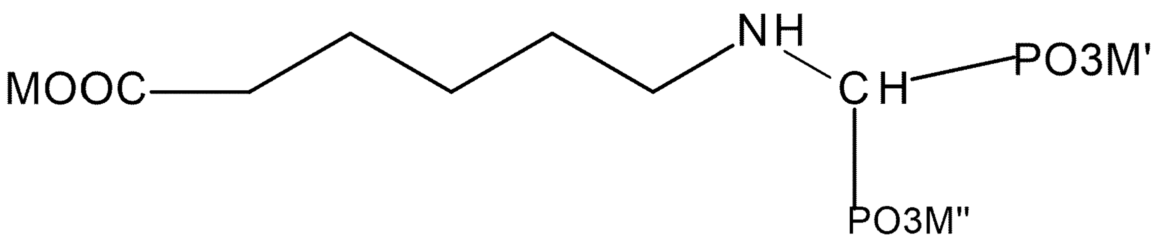

Formula II

wherein M, M' and M" are as defined above.

Other preferred scale inhibitors of Formula I are those obtainable from the N-formyl lactams according to the process for the synthesis of the invention, such as N-formyl butyric lactam, N-formyl valeric lactam and N-formyl caprolactam.

Scale inhibitors of Formula I present an uncommon alkyl-phosphonated moiety with respect to conventional phosphonate scale inhibitors, i.e. they present the N-methine-diphosphonic moiety; in other words, scale inhibitors of Formula I present a methine-diphosphonated moiety bonded to an amine group. Indeed, as can be observed from Formula I, scale inhibitors of Formula I present a -CH residue bonding two phosphonates groups, such -CH residue being bonded to an amine group.

Similar alkylamino diphosphonic derivative have been reported previously with mention of scale inhibiting properties, see DE19691958123, DE2651904A1, US05760368, DE2504724A1, DE2530139A1 and DE2737259A1. Nevertheless, the most preferred scale inhibitors of formula I, as well as all scale inhibitors according to the invention, differ both in thermal stability, biodegradability and by the specific way of being produced i.e. by using cyclic amide as raw material when compared to previously reported synthesis such as exposed in DE19813133308 and PL212754B1. As mentioned above, conventional phosphonate scale inhibitors usually present mono or dialkyl-phosphonated moieties bonded to amine groups. In other words, conventional phosphonate scale inhibitors present at least one $-CH_2$- residue bonding just one phosphonate group and an amine group. Formula III shows an example of an N-dialkyl-phosphonated moiety.

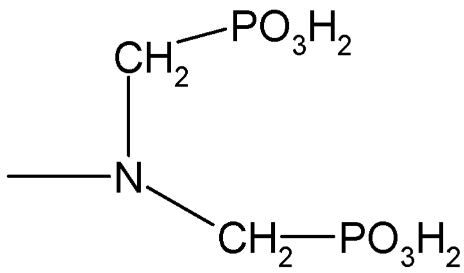

Formula III

As shown in the experimental section below, scale inhibitors of Formula I have been found to have concomitantly suitable thermal stability, good biodegradability and broad scale inhibition performances, i.e. they inhibit scale formation of several types of scales; indeed, as showed in the experimental section, the scale inhibitors of Formula I provide scale inhibition against both calcium and barium scales. Moreover, scale inhibitors of Formula I do not produce aminomethylphosphonic acid (AMPA) when biodegraded (they are "AMPA-free"). The aforementioned difference between scale inhibitors of Formula I and conventional phosphonate scale inhibitors allows the firsts to be more versatile and usable in a wider range of applications with respect to the latter.

The method of the invention proves to be useful to inhibit scale formation in any field of application, such as oil production, industrial water treatment, reverse osmosis and paper pulp treatment, as scale inhibitors of Formula I are effective in several working conditions due to their suitable thermal stability and effectiveness over a broad range of different scale salts.

Subject-matter of the present invention is also the use of at least one compound of Formula I for scale inhibition (not being according to the invention). Said at least one compound of Formula I may be used to treat aqueous system, for example aqueous system involved in oil production, industrial water treatments, reverse osmosis, paper pulp treatments, mining and cleaning applications, allowing scale inhibition in said aqueous system.

Another subject-matter of the present invention is a scale inhibiting composition comprising at least one scale inhibitor of Formula I as defined above in a suitable solvent.

Suitable solvent for Formula I scale inhibitors may be, for example, aqueous solvents, such as water or water mixtures, e.g. aqueous pH buffers and aqueous mixtures containing acids and/or alcohols in quantities preferably below 20% v/v.

The scale inhibition composition of the invention can comprise also conventional additives for scale inhibiting compositions. Moreover, it can comprise also other scale inhibitors other than the ones of Formula I. For example, the composition of the invention may comprise also low molecular weight polymer such as polymaleic acid (e.g. the currently marketed product Dequest® P9000), sulfonated acrylic copolymers (e.g. the currently marketed product Dequest® P9300) and Phosphino Polycarboxylic Acid Copolymer (e.g. the currently marketed product Dequest® P9100). Indeed, the combination of scale inhibitors of Formula I and low molecular polymer such as Dequest® P9300 afford compositions having an improved compatibility to calcium. In view of the many advantages of scale inhibitors of Formula I explained above, it is self-evident that the composition of the invention affords scale inhibition in many working conditions, other than having low environmental impact. Moreover, the composition of the invention is useful in many working fields, for example in oil production, industrial water treatments, reverse osmosis, paper pulp treatments, mining and cleaning applications.

Additionally compounds of Formula I are expected to have good sequestering and complexing properties in cleaning.

Another subj ect-matter of the present invention is a process for the synthesis of a scale inhibitor of Formula I comprising the step of reacting a solution of a dehydrated phosphorous acid with a N-formyl lactam, thereby providing said scale inhibitor of Formula I, characterized in that said N-formyl lactam is obtained by the further step of reacting the correspondent non-formyl lactam with formic acid, at temperature above 100 °C, preferably of 120 to 150 °C, more preferably of 140 °C, and for a time comprised in the range of 0.5 to 5 hours, preferably of 2 to 4 hours, more preferably for about 3 hours.

In the present invention, "dehydrated phosphorous acid" refers to a phosphorous acid, or its anions or salts (depending on the system pH), which nucleophilicity is suitable to bond carbons. Dehydrated phosphorous acids are commercially available, e.g. as pyrophosphorous derivatives (such as pyrophosphorous acid) and phosphorus trioxide ($P_4O_6$). The dehydrated phosphorous acid can be also obtained by reacting phosphorous acid with a suitable dehydrating agent, providing removal of the hydrogen atom bonded to phosphorous.

In the present invention, "suitable dehydrating agent" refers to one or more compounds that can dehydrate

phosphorous acid. Suitable dehydrating agent are selected from acetic anhydride, acyl chloride and mixtures thereof. Preferably, suitable dehydrating agent serves also as a solvent for said phosphorous acid. According to the above, the dehydrated phosphorous acid can be reacted with the solution or suspension of N-formyl lactam by adding a solution of phosphorous acid dissolved in the suitable dehydrating agent to said solution or suspension of N-formyl lactam; such addition is preferably carried out slowly, e.g. dropwise, and keeping the temperature of the reaction mixture below 50 °C.

In the present invention, "non-formyl lactam" refers to lactams wherein the nitrogen atom forming the lactam is bound to a hydrogen. The non-formyl lactam is the precursor of the N-formyl lactam, which is prepared reacting the non-formyl lactam with formic acid according to the process of the invention. Therefore, "correspondent non-formyl lactam" refers to the same compound of the N-formyl lactam, but without the formyl group, and vice versa, i.e. "correspondent N-formyl lactam" refers to the same compound of the non-formyl lactam, but with the formyl group. Suitable non-formyl lactam according to the process of the invention are $C_3$-$C_{16}$ lactams, optionally substituted by $C_1$-$C_6$ linear, branched or cyclic alkyl group; said $C_3$-$C_{16}$ lactams and/or said alkyl group being optionally substituted by one or more of the substituent selected from halogen, hydroxyl and amine.

In the present invention, "N-formyl lactam" refers to lactams wherein the nitrogen atom forming the lactam is bound to a formyl group. According to the process of the invention, said N-formyl lactam is obtained starting from the correspondent non-formyl lactam. Suitable N-formyl lactam are $C_3$-$C_{16}$ lactams, optionally substituted by $C_1$-$C_6$ linear, branched or cyclic alkyl group; said $C_3$-$C_{16}$ lactams and/or said alkyl group being optionally substituted by one or more of the substituent selected from halogen, hydroxyl and amine.

For example, according to the invention, suitable N-formyl lactam are N-formyl propiolactam, N-formyl butyrolactam, N-formyl valerolactam, N-formyl caprolactam, N-formyl 2-azocanone and N-formyl 2-undecanone; the correspondent non-formyl lactam are, respectively, propiolactam, butyrolactam, valerolactam, caprolactam, 2-azocanone and 2-undecanone.

It can be advantageous to react the non-formyl lactam with formic acid by dissolving the non-formyl lactam in formic acid, the latter thus acting as a solvent for the non-formyl lactam. After such dissolution is carried out, the solution is heated for a temperature and a time according to the process of the invention, i.e. for a temperature above 100 °C, preferably from 120 to 150 °C, more preferably of 140 °C, and for a time comprised in the range of 0.5 to 5 hours, preferably for 2 to 4 hours, more preferably for about 3 hours.

In the reaction of non-formyl lactam and formic acid, molar ratio of formic acid/non-formyl lactam is preferably in the range of 0.5/1 to 1.5/1, more preferably of 0.8/1 to 1.2/1, even more preferably is about 1/1.

Once obtained according to the process of the invention, N-formyl lactam can be isolated and washed e.g. with water prior its reaction with dehydrated phosphorous acid. Alternatively, once obtained according to the process of the invention, N-formyl lactam can be directly reacted with the dehydrated phosphorous acid without isolating it, therefore providing a one-pot reaction process.

The reaction of N-formyl lactam with dehydrated phosphorous acid is preferably carried out with such N-formyl lactam in solution or suspension. Therefore, once obtained according to the process of the invention, N-formyl lactam is first dissolved in a suitable solvent or suspended in a suitable dispersant, such as acetic acid, methane sulfonic acid, sulfolane, xylene, acetic anhydride, acyl chloride and mixtures thereof, and then is reacted with the dehydrated phosphorous acid according to the above. The molar ratio of said dehydrated phosphorous acid/N-formyl lactam is preferably in the range of 0.2/1 to 3.5/1, more preferably in the range of 0.5/1 to 2.5/1, even more preferably of about 2/1.

In order to improve the process of the invention, the reaction mixture of dehydrated phosphorous acid and N-formyl lactam is preferably gradually heated at a temperature in the range of about 70 °C to about 100 °C, more preferably of about 80 °C to 90 °C, for a time comprised in the range of about 30 minutes to about 4 hours, more preferably of about 1 hour to about 3 hours, even more preferably for about 2 hours. After such heating, stoichiometric to excess of water is preferably added to the reaction mixture, and such reaction mixture is then subsequently boiled for a short time, e.g. 0.5 hours. This allows hydrolyzing the dehydrated phosphorous moieties. After the addition of water, the suitable solvent or suitable dispersant of N-formyl lactam is preferably removed, e.g. by distillation at reduced pressure.

The scale inhibitor of Formula I obtained according to the process of the invention can be either recovered in its acidic form, or optionally it can be neutralized adding a base, thus producing said compound of Formula I as a salt.

The process of the invention takes advantage of the formation of the N-formyl lactam by specifically reacting the correspondent lactam with formic acid at elevated temperature for few hours.

The process of the invention provides the advantages of being suitable for continuous, semi-continuous or for batch processes where no intermediate need to be isolated and the final product can be either isolated by filtration or preferably neutralized and diluted to give directly the end product. Moreover, the process advantageously make use of cheap raw material and ease of implementation at industrial scale.

According to embodiments, after the reaction of non-formyl lactam with formic acid according to the temperature and time disclosed above, the further step of removing formic acid in excess from the reaction mixture is comprised. Such removing can be performed by conventional methods, e.g. by distilling formic acid at reduced pressure. According to embodiments, after the reaction of non-formyl lactam with formic acid according to the temperature and time disclosed

above, the further step of cooling the reaction mixture at a temperature of below 50 °C, preferably in the range of 25 to 50 °C, more preferably of 40 °C, is comprised. According to these embodiments, the obtained N-formyl lactam is reacted with the dehydrated phosphorous acid after it has been cooled down at the temperature mentioned above. When both the removal of formic acid in excess and the cooling of the reaction mixture are carried out, the removal of formic acid in excess is preferably carried out before the cooling of the reaction mixture.

Therefore, an exemplary process for the synthesis of a scale inhibitor of Formula I comprises the following steps:

a) reacting a non-formyl lactam with formic acid, at temperature above 90 °C, preferably of 120 to 150 °C, more preferably of 140 °C, and for a time comprised in the range of 0.5 to 5 hours, preferably of 2 to 4 hours, more preferably for about 3 hours, thereby obtaining the correspondent N-formyl lactam;
b) removing formic acid in excess from the reaction mixture;
c) cooling the reaction mixture at a temperature of below 50 °C, preferably in the range of 25 to 50 °C, more preferably of 40 °C; and
d) reacting a solution of a dehydrated phosphorous acid with the correspondent N-formyl lactam, thereby providing said scale inhibitor of Formula I.

The process of the invention, as it will be shown in the examples below, is beneficial and useful for manufacturing scale inhibitors of Formula I. Indeed, it provides for high yields and high purity of the final product and requires simple reagents, with the option to synthetize in-house some of the useful reagents.

EXPERIMENTAL EXAMPLES

Example 1 - Synthesis of compounds of Formula I

Example 1.1

Process of the invention without isolation of intermediate - One pot reaction - Preferred process

In a 0.5 L reactor, 56.58 g of caprolactam are dissolved in 46.06 g of formic acid. The clear solution is stirred and heated until reflux (about 140 °C) for 3 hours. At the end of the 3 hours, excess of formic acid (19.4 g) is distilled under vacuum. The reaction mixture is cooled down to about 40 °C, taking care to avoid solidification of the intermediate (white solid). A premixed homogeneous solution of 82 g of phosphorous acid and 205 g of acetic anhydride (dehydrated phosphorous) is added dropwise onto the crude steerable N-formyl aminocaproic acid during 30 minutes while keeping the temperature below 50 °C. After the addition of dehydrated phosphorous, the reaction mixture is gradually heated and stirred at about 90 °C for 2 hours. After stirring, 50 g of water is added to the reaction mixture and the content of the reactor is boiled at 105 °C for 30 minutes. The excess of acetic acid formed is distilled and recovered as acetic acid cut (215 g of 85% aqueous acetic acid). Reactor content was diluted with 100 mL of water and the suspended solid phosphonic acid was partially neutralized by addition of NaOH 50%. $^{31}$P and $^{1}$H NMR analysis of the crude product showed the presence of 63.4 wt% of 6-((diphosphonomethyl)amino)hexanoic acid in the reaction mixture, with main impurities being HEDP (< 4wt%), residual phosphoric acid and acetic acid (< 5wt%).

Example 1.2

Process of the invention using a previously isolated intermediate

20.5 g of phosphorous acid are added with stirring to 48 mL of acetic anhydride, while maintaining the temperature below 40 °C. This solution is added dropwise within 15 minutes with stirring, to 20 g of white solid N-formyl aminocaproic acid (previously prepared according to the process of Example 1.1, first three periods) suspended in 19 mL acetic acid. Here, the temperature rises to 42 °C. After completion of the addition and a 30 minutes post-stirring, the reaction is heated to 85 °C and maintained at this temperature for 1.5 hours. The reaction mixtures is then mixed with 20 mL of water and boiled for a short time. After cooling, 11.58 g of 6-((diphosphonomethyl)amino)hexanoic acid is recovered after filtration as a white solid with a purity >95 wt% ( according to $^{31}$P and $^{1}$H NMR analysis).

Example 1.3

Process of the invention with isolation of the intermediate on site - Two-steps reaction

In a 0.5 L reactor, 112 g of caprolactam are dissolved in 60 g of formic acid and the clear solution is stirred and

heated until reflux (about 140 °C) for 3 hours. At the end of the 3 hours, excess of formic acid (8.9 g) is distilled under vacuum. The reaction mixture is cooled down to 40 °C (suspension formed). The solid (N-formyl aminocaproic acid) is recovered and is suspended in minimal volume of water, and then the solid is recovered again by filtration. To 50.36 g of crude N-formyl aminocaproic acid is added 60 mL of fresh acetic acid and to this suspension a premixed homogeneous solution of 49.2 g of phosphorous acid and 132.6 g of acetic anhydride (dehydrated phosphorous) is added dropwise during 30 minutes, while keeping the temperature below 50°C. After the addition of the dehydrated phosphorous, the reaction mixture is gradually heated at about 90 °C and stirred for a period of about 2 hours. After the stirring, 35 g of water is added to the reaction mix and the content of the reactor is boiled at 105 °C for 30 minutes. The excess of acetic acid formed is then distilled and recovered as acetic acid cut (180g of 85% aqueous acetic acid). Reactor content was diluted with water and the suspended solid phosphonic acid was partially neutralized by addition of NaOH 50%. $^{31}P$ and $^{1}H$ NMR analysis of the crude product showed the presence of 65.4 wt% of 6-((diphosphonomethyl)amino)hexanoic acid in the reaction mixture, with main impurities being HEDP (< 4wt%), residual phosphorous acid and acetic acid (< 5wt%).

Example 1.4

Process of the invention with isolation of intermediate on site - Two-steps reaction

A crude N-formyl aminocaproic acid is prepared as in Example 1.1, and then is washed with a minimum of water before being filtered, giving an off-white solid (moisture of 6.6 wt%). 60g of the so-prepared N-formyl aminocaproic acid are added in 60 g of acetic acid, and the suspension is stirred. To this suspension, a premixed homogeneous solution of 60 g of phosphorous acid and 169 g of acetic anhydride (dehydrated phosphorous) is added dropwise during 30 minutes while keeping the temperature below 50 °C. After the addition of the dehydrated phosphorous, the reaction mixture is gradually heated at about 90 °C and stirred for a period of about 2 hours. After the stirring, 30 g of water are added to the reaction mixture and the content of the reactor is boiled at 105 °C for 30 minutes. The excess of acetic acid formed was then distilled and recovered as acetic acid cut. Reactor content is diluted with minimum water (about 60 mL). $^{31}P$ and $^{1}H$ NMR analysis of the crude product showed the presence of 59.0 wt% of 6-((diphosphonomethyl)amino)hexanoic acid in the reaction mixture, with main impurities being HEDP, residual phosphorous acid and acetic acid. The suspended solid phosphonic acid was filtered (75 g) and dried, giving a slightly yellowish solid (pure at >90%).

Example 1.5 (Comparative)

Comparative process using $PCl_3$ as dehydrated phosphorous

56.6 g of caprolactam are dissolved in 35 g of formic acid, stirred and heated to 80 °C. To this solution, 151 g of $PCl_3$ is added subsurface dropwise for 1 hour, keeping the temperature lower than 85 °C. A foamy yellowish syrup is obtained. 100 g of water is added to the syrup. The reaction mixture is boiled at 100 °C, and then it is cooled. $^{31}P$ and $^{1}H$ NMR analysis of the crude product showed the absence of the 6-((diphosphonomethyl)amino)hexanoic acid, and showed instead mainly impurities, in particular HEDP and residual phosphorous acid. The resulting product is yellow coloured. In addition to the above, $PCl_3$ is not conveniently used in industrial sites due to highly explosion risk.

Example 2 - Formula I scale inhibitor tests

Example 2.1 - Thermal stability test

To assess the thermal stability of phosphonates (both phosphonates according to the present invention and comparative ones) in the presence of synthetic North Sea water, the present test is carried out submitting mixtures of North Sea water (North Sea water composition is showed on Table 1) and scale inhibitors stabilized at pH 5.5, to a one week heating at 140 °C.

Table 1

| Salts | mmol/l |
|---|---|
| NaCl | 420.1 |
| $CaCl_2 \cdot 2H_2O$ | 10.08 |
| $MgCl_2 \cdot 6H_2O$ | 54.32 |

(continued)

| Salts | mmol/l |
|---|---|
| KCl | 8.7 |
| $Na_2SO_4$•$10H_2O$ | 25.8 |
| $NaHCO_3$ | 2.21 |

The test is carried out as follows: an aqueous solution containing 20% of scale inhibitor active acid at pH 5.5 (solution 1) is prepared. After that, synthetic North Sea water having a pH of 5.5 (solution 2) is prepared. A 1% scale inhibitor active acid sample is prepared by mixing 1 g of solution 1 with 19 g of solution 2. The so prepared sample is placed in a closed pressure resistant tube and kept in an oven at minimum 140 °C for one week. Finally, after one week, the sample is analyzed by means of 31P NMR spectroscopy.

Table 2 shows the percentage by weight of the tested scale inhibitors decomposition after the treatment.

Table 2

| Scale inhibitor | Decomposition (%) |
|---|---|
| HEDP (comparative) | 2.3 |
| ATMP (comparative) | 12.5 |
| HEMPA (comparative) | 19.0 |
| DTMPA (comparative) | 23.6 |
| Compound of Formula II (according to the present invention) | 3.0 |

Wherein HEDP is 1-hydroxy ethylidene-1,1-diphosphonic acid; ATMP is aminotris(methylenephosphonic acid); HEMPA is hydroxyethylamino-di(methylene phosphoric acid); and DTMPA is [[(phosphonomethyl) imino] bis [2,1-ethanediylnitrilobis (methylene)]] tetrakis-phosphonic acid.

This test clearly shows the good thermal stability of the scale inhibitors of Formula I, as their thermal stability result on par with the scale inhibitor benchmark HEDP, and better than other scale inhibitor such as ATMP, HEMPA and DTMPA. Notwithstanding HEDP is comparable with the compound the scale inhibitors of Formula I for thermal stability, the first is not commonly used (for example, it is seldom used in oil and gas applications) due to its other unfavorable properties and commercial disadvantage.

Example 2.2 - Brine and sea water compatibility test

Scale inhibitors, especially if they have anionic moieties, may form complexes and precipitate with hardness salts, for example calcium, before they can fulfill their dispersing and chelating functions. Compatibility tests are carried out to check if complexation happens or not. If compatibility is poor, not only precipitation occurs, but also overall scale formation becomes faster.

To assess sea water compatibility of both scale inhibitors according to the present invention and comparative ones, the present test is carried out as follows:

- prepare synthetic North Sea water (Table 1 shows North Sea water composition) at pH 5.5;
- add 100, 1000, 10000 and 50000 ppm active acid of the tested scale inhibitors to four synthetic North Sea water solutions, thus obtaining four solutions for each scale inhibitor (scale inhibitor solutions);
- prepare five blank solutions made by mixing the required amount of distilled water with North Sea water to obtain the same dilution as obtained by the addition of 1, 100, 1000, 10000 and 50000 ppm active acid of the tested scale inhibitors to the synthetic North Sea water solution;
- store in an oven at 90 °C for a period of 24 hours the scale inhibitor solutions and the five blank solutions;
- assess Ca tolerance by visual observation (clear solution or turbidity).

Table 3 shows the results of the present test.

Table 3

| Scale inhibitors | Ca Tolerance , visual observation | | | |
|---|---|---|---|---|
| / | 100 ppm | 1000 ppm | 10000 ppm | 50000 ppm |
| DTMPA (comparative) | clear | turbid | turbid | clear |
| HEDP (comparative) | clear | turbid | turbid | clear |
| Compound of Formula (according to the present invention) | clear | turbid | turbid | clear |

The results of this this test prove that Formula I scale inhibitors have the same tolerance as scale inhibitor benchmarks, substantiating their versatility to be used in several conditions, unlike conventional phosphonate scale inhibitors.

Example 2.3 - Barium sulphate scale inhibition

To evaluate the efficiency of both scale inhibitors according to the present invention and comparative ones in preventing barium scale inhibition in oil field scaling conditions, the present test is carried out determining the amount of $BaSO_4$ that has precipitated after 22 hours at 90 °C, in a 50/50 mixture of synthetic North Sea water

(Table 1 shows North Sea water composition) and Formation water (Table 4 shows Formation water composition) comprising sale inhibitors to be tested. The amount of soluble Ba ions is determined by inductively coupled plasma mass spectrometry (ICP-MS).

Table 4

| Salts | mmol/l |
|---|---|
| NaCl | 1313 |
| CaCl2•2H2O | 77.75 |
| MgCl2•6H2O | 19.74 |
| KCl | 11 |
| BaCl2•2H2O | 1.82 |
| SrCl2•6H2O | 7.53 |

The present test is carried out as follows:

synthetic North Sea and Formation waters are prepared at pH 6. These water solutions are preheated at 90 °C before starting the test. An acetic acid/sodium acetate buffer is prepared and added to the North Sea water in order to give the required pH;
- 15, 30, 50, 70 and 100 ppm of scale inhibitor active phosphonic acid is added to a glass bottle;
- 50 ml of North Sea water is added to this glass bottle while stirring. 50 ml of Formation water is then added to this glass bottle;
- one blank solution is prepared, by mixing 50 ml of North Sea water with 50 ml of Formation water;
- sample bottles were put in an oven for 22 hours at 90 °C;
- after 22 hours, 3 ml of each test solution was taken from the surface, was filtered through a 0.45 μm Millipore filter and added to a stabilizing solution.

The stabilized samples were analyzed by ICP-MS for Ba.

Table 5 shows the results of the present test. Ba scale inhibition stands for the minimum phosphonate concentration to inhibit 100% $BaSO_4$ scale.

Note that the 100% phosphonate efficiencies for $BaSO_4$ scale inhibition are calculated as follows:

$$\% \text{ Scale inhibition} = (V_1 - V_0 / V_2 - V_0) \times 100$$

wherein $V_0$ = ppm Ba found in the blank solution; $V_1$ = ppm Ba found in the solution with the scale inhibitor; and $V_2$ =

ppm Ba present in the Formation water.

Table 5

| Scale inhibitors | 100% Ba scale inhibition |
|---|---|
| DTMPA (comparative) | 15 ppm |
| HEDP (comparative) | 30ppm |
| Compound of Formula II (according to the present invention) | 50 ppm |
| 6-aminocaproic N,N Bis-methylene phosphonic acid (according to PCT/EP2007/004682) (Comparative) | (no inhibition on Ba) |

According to the results showed on Table 5, the scale inhibitors of Formula I present a barium scale inhibiting effectiveness comparable to some phosphonate scale inhibitors (DTMPA and HEDP), and greatly improved with respect to more recent phosphonate scale inhibitors (i.e. 6-aminocaproic N,N Bis-methylene phosphonic acid).

Example 2.4 - Calcium carbonate scale inhibition

To evaluate the efficiency of both scale inhibitors according to the present invention and comparative ones in preventing calcium carbonate scale in industrial water treatment conditions, the present test is carried out determining the amount of $CaCO_3$ that has precipitated after 22 hours at 50 °C in a 50/50 mixture of cationic and anionic waters with the test phosphonates at three different concentrations. The amount of soluble Ca ions is analyzed by titration.

The test is carried out as follows:

Conditions: 240 ppm $Ca^{2+}$; 732 ppm $HCO^{3-}$; 50 °C; 250 rpm; 22-24h; Langelier Scale Index (LSI)= + 2,5-2,6
Carbonate brine: 10.081 g of $NaHCO_3$ in 11 deionized water.
Hardness brine: 8.821 g of $CaCl_2$.2H20 in 1 l deionized water.
pH buffer for testing solution: 10% solution of $NH_4Cl$ in deionized water, adjusted to pH 8.7 with 25% $NH_4OH$ solution. This solution has to be freshly made.

Add to a glass bottle the required amount of the scale inhibitor phosphonate mother solution to obtain the t concentration of the scale inhibitor (2, 5, and 10 ppm active phosphonic acid) in the final test mixture.

Add 10 ml of the carbonate brine.

Add 2.5 ml of buffer pH 8.7.

Adjust weight to precisely 90 g with deionized water.

Add 10 ml of the hardness brine.

Put the sample bottles in an oven for 22 hours at 50 °C. After 22 hours, take 50 ml of each test solution from surface, filter through a 0.45 $\mu$m Millipore filter, measure and note the weight of the solution (Wtsam), then acidify to pH 1 with an HCl solution. Measure and note the total weight after HCl addition (Wta). Analyze Ca by titration (Caf). The phosphonate efficiency as $CaCO_3$ scale inhibition is then calculated using the equation:

$$\%\ CaCO3\ inhibition = (Cat - Cab) \times 100) \div (Cai - Cab)$$

wherein Cat = calcium remaining in solution of the t sample, where the dilution with HCl has been corrected (Cat=(Caf)$\times$Wta/Wtsam); Cab = Calcium remaining in the blank (i.e. glass bottle wherein no phosphonate was added; under these condition corresponds to minimum of 80% of calcium precipitated as $CacO_3$); and Cai = Total calcium present in a reference t sample (i.e. a sample t in which the hardness brine has simply been diluted with water to get the same final volume).

Table 6

| Scale inhibitor | % $CaCO_3$ inhibition |
|---|---|
| Reference | 100% |
| No phosphonate (Blank) | <20% |

(continued)

| Scale inhibitor | % $CaCO_3$ inhibition |
|---|---|
| DTMPA (comparative) | 97% @ 5 ppm |
| HEDP (comparative) | 96% @ 2 ppm |
| ATMP (comparative) | 91% @ 10 ppm |
| Compound of Formula II (according to the present invention) | 94% @ 2 ppm |

Table 6 shows the results of the present test.

This test clearly shows that Formula I scale inhibitors are capable of inhibiting Calcium carbonate scale formation as good as, or even better than, phosphonate scale inhibitor benchmarks.

Additionally, experimental data has showed that using a final product obtained by isolating the final product (high purity >80% by $^{31}P$ NMR analysis) or without isolation and direct formulation/neutralization into the reactor (medium purity >60% by $^{31}P$ NMR analysis) gave similar performance in selected calcium phosphate and calcium carbonate inhibition tests.

Example 3 - Biodegradability tests

Biodegradation tests are performed using the standard "closed bottle" marine test methods in accordance with OECD Guidelines 306. OECD306 is a test that measure biodegradation indirectly through the determination of the amount of dissolved oxygen in the medium. The measurement obtained are used to estimate the biodegradability (BOD) during the process.

The measured value of the BOD need to be corrected by dividing either with an experimental value of COD or a ThOD and multiply by 100% to get the biodegradability value. Results are compared to a previous study for the BOD of 6-aminocaproic N,N Bis-methylene phosphonic acid (according to PCT/EP2007/004682) that is a new benchmark thermally stable and biodegradable aminoacid phosphonate. 6-aminocaproic N,N Bis-methylene phosphonic acid (according to PCT/EP2007/004682) (comparative) was tested at a concentration of 2.0 ppm of pure active solid or 5.5 ppm as commercial product. Biodegradability after 28 days of such product was 77.15%.

OECD306 closed bottle test for was performed with a similar test set-up. Compound of Formula II, i.e. scale inhibitor of the invention, was tested at a concentration of 2 ppm of pure active solid. Biodegradability of compound of Formula II after 14 days was 31.5%.

## Claims

**1.** A process for the synthesis of a scale inhibitor of Formula I

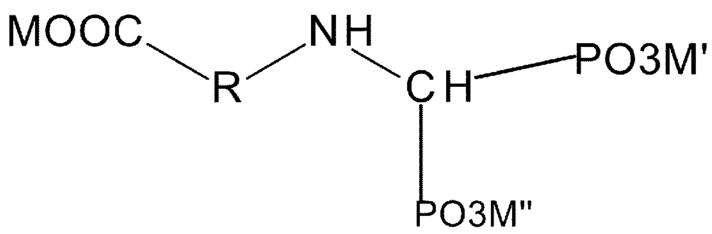

Formula I

wherein: M, M' and M" are independently selected from hydrogen and/or cation, and
R is selected from $C_2$-$C_{15}$ linear, branched alkyl moiety, such alkyl moiety being optionally substituted by a $C_1$-$C_6$ linear, branched or cyclic alkyl group;
comprising the steps of reacting a non-formyl lactam, selected from $C_3$-$C_{16}$ lactams optionally substituted by $C_1$-$C_6$ linear, branched or cyclic alkyl group, with formic acid, at temperature above 100 °C and for a time comprised in the range of 0.5 to 5 hours obtaining thereby a correspondent N-formyl lactam and subsequently reacting a solution of a dehydrated phosphorous acid with the obtained N-formyl lactam, thereby providing said scale inhibitor of Formula I.

2. The process according to claim 1, **characterized in that** said temperature is comprised in the range of 120 to 150 °C, preferably is 140 °C; and/or said time is comprised in the range of 2 to 4 hours, preferably is 3 hours.

3. The process according to claim 1, **characterized in that** said non-formyl lactam is selected from propiolactam, butyrolactam, valerolactam, caprolactam and 2-azocanone.

4. The process according to claim 1, **characterized in that** it comprises a further step of removing said formic acid in excess after the reaction of said non-formyl lactam with said formic acid.

5. The process according to claim 1, **characterized in that** it comprises a further step of cooling the reaction mixture at a temperature of below 50 °C, preferably in the range of 25 to 50 °C, more preferably of 40 °C after the reaction of said non-formyl lactam with said formic acid.

6. The process according to claim 1, **characterized in that** after said N-formyl lactam is obtained, it is isolated and washed with water.

7. The process according to claim 1, **characterized in that** the molar ratio said formic acid/non-formyl lactam is in the range of 0.5/1 to 1.5/1, preferably of 0.8/1 to 1.2/1, more preferably is about 1/1.

**Patentansprüche**

1. Verfahren zur Synthese eines Kesselsteininhibitors der Formel I

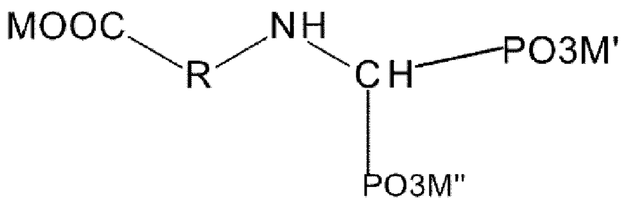

Formel I,

wobei: M, M’ und M" unabhängig voneinander aus Wasserstoff und/oder Kation ausgewählt sind und R aus einem linearen oder verzweigten $C_2$-$C_{15}$-Alkylrest ausgewählt ist, wobei dieser Alkylrest optional durch eine lineare, verzweigte oder zyklische $C_1$-$C_{16}$-Alkylgruppe substituiert ist;
umfassend die Schritte des Umsetzens eines Nicht-Formyllactams, ausgewählt aus $C_3$-$C_{16}$-Lactamen, welche optional durch eine lineare, verzweigte oder zyklische $C_1$-$C_6$-Alkylgruppe substituiert sind, mit Ameisensäure bei einer Temperatur über 100 °C und für eine Zeit im Bereich von 0,5 bis 5 Stunden, wodurch ein entsprechendes N-Formyllactam erhalten wird, und anschließendes Umsetzen einer Lösung einer dehydratisierten Phosphorsäure mit dem erhaltenen N-Formyllactam, wodurch der Kesselsteininhibitor der Formel I bereitgestellt wird.

2. Verfahren nach Anspruch 1, **dadurch gekennzeichnet, dass** die Temperatur im Bereich von 120 bis 150 °C liegt, vorzugsweise 140 °C beträgt; und/oder die Zeit im Bereich von 2 bis 4 Stunden liegt, vorzugsweise 3 Stunden beträgt.

3. Verfahren nach Anspruch 1, **dadurch gekennzeichnet, dass** das Nicht-Formyllactam aus Propiolactam, Butyrolactam, Valerolactam, Caprolactam, und 2-Azocanon ausgewählt ist.

4. Verfahren nach Anspruch 1, **dadurch gekennzeichnet, dass** es einen weiteren Schritt des Entfernens der überschüssigen Ameisensäure nach der Reaktion des Nicht-Formyllactams mit der Ameisensäure umfasst.

5. Das Verfahren gemäß Anspruch 1, **dadurch gekennzeichnet, dass** es einen weiteren Schritt des Abkühlens der Reaktionsmischung auf eine Temperatur von unter 50 °C, vorzugsweise im Bereich von 25 bis 50 °C, stärker bevorzugt von 40 °C nach der Reaktion des Nicht-Formyllactams mit der Ameisensäure umfasst.

6. Verfahren nach Anspruch 1, **dadurch gekennzeichnet, dass** das N-Formyllactam nach seiner Gewinnung isoliert und mit Wasser gewaschen wird.

7. Verfahren nach Anspruch 1, **dadurch gekennzeichnet, dass** das Molverhältnis Ameisensäure/Nicht-Formyllactam im Bereich von 0,5/1 bis 1,5/1, vorzugsweise von 0,8/1 bis 1,2/1, liegt und stärker bevorzugt etwa 1/1 beträgt.

## Revendications

1. Procédé de synthèse d'un inhibiteur de tartre de formule I

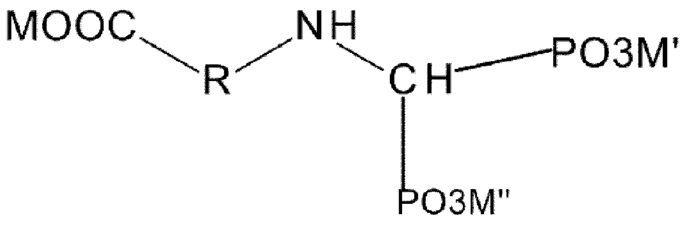

Formule I

dans lequel : M, M' et M" sont indépendamment choisis parmi l'hydrogène et/ou le cation, et R est choisi parmi les fragments d'alkyle linéaires ou ramifiés de $C_2$-$C_{15}$, ces fragments d'alkyle étant éventuellement substitués par un groupe alkyle linéaire, ramifié ou cyclique en $C_1$-$C_6$ ; comprenant les étapes de réaction d'un lactame non formique, choisi parmi les lactames $C_3$-$C_{16}$ éventuellement substitués par un groupe alkyle linéaire, ramifié ou cyclique en $C_1$-$C_6$, avec l'acide formique, à une température supérieure à 100 °C et pendant une durée comprise entre 0,5 et 5 heures, pour obtenir un lactame N-formique correspondant, puis de réaction d'une solution d'acide phosphoreux déshydraté avec le lactame N-formique obtenu, ce qui permet d'obtenir l'inhibiteur de tartre de formule I.

2. Procédé selon la revendication 1, **caractérisé en ce que** la température est comprise entre 120 et 150 °C, de préférence à 140 °C, et/ou que la durée est comprise entre 2 et 4 heures, de préférence à 3 heures.

3. Procédé selon la revendication 1, **caractérisé en ce que** ledit lactame non formique est choisi parmi le propiolactame, le butyrolactame, le valérolactame, le caprolactame et le 2-azocanone.

4. Procédé selon la revendication 1, **caractérisé en ce qu'**il comprend une étape supplémentaire d'élimination dudit acide formique en excès après la réaction dudit lactame non formique avec ledit acide formique.

5. Procédé selon la revendication 1, **caractérisé en ce qu'**il comprend une étape supplémentaire de refroidissement du mélange réactionnel à une température inférieure à 50 °C, de préférence comprise entre 25 et 50 °C, plus préférentiellement de 40 °C après la réaction dudit lactame non formique avec ledit acide formique.

6. Procédé selon la revendication 1, **caractérisé en ce qu'**après l'obtention dudit lactame N-formique, celui-ci est isolé et lavé à l'eau.

7. Procédé selon la revendication 1, **caractérisé en ce que** le rapport molaire acide formique/lactame non formique est compris entre 0,5/1 et 1,5/1, de préférence entre 0,8/1 et 1,2/1, plus préférentiellement environ 1/1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4307038 A
- DE 2732777 B1
- EP 0000930 A1
- DE 1958123 A1
- EP 1932850 A1
- WO 2008017338 A2
- EP 2007004682 W
- DE 19691958123
- DE 2651904 A1
- US 05760368 A
- DE 2504724 A1
- DE 2530139 A1
- DE 2737259 A1
- DE 19813133308
- PL 212754 B1


### Non-patent literature cited in the description


- **PRISCHCHENKO ANDREY.** Organosilicon based synthesis of new functionalised aminomethylenediphosphonates with moieties of amino acids. *Journal of Organometallic Chemistry,* 2018, vol. 871, 36-39